(19) Europäisches Patentamt / European Patent Office / Office européen des brevets

(11) **EP 3 384 797 B1**

(12) **EUROPEAN PATENT SPECIFICATION**

(45) Date of publication and mention
of the grant of the patent:
**01.04.2020 Bulletin 2020/14**

(21) Application number: **15909761.7**

(22) Date of filing: **02.12.2015**

(51) Int Cl.:
*A43B 13/04* (2006.01)    *A43B 13/02* (2006.01)
*F16F 7/00* (2006.01)    *C08G 69/40* (2006.01)
*C08J 9/12* (2006.01)    *C08J 9/14* (2006.01)
*C08J 9/16* (2006.01)    *C08J 9/232* (2006.01)

(86) International application number:
**PCT/JP2015/083844**

(87) International publication number:
**WO 2017/094131 (08.06.2017 Gazette 2017/23)**

(54) **MEMBER FOR SHOE SOLES, AND SHOE**

ELEMENT FÜR SCHUHSOHLEN UND SCHUHE

ÉLÉMENT POUR SEMELLES DE CHAUSSURE, ET CHAUSSURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.10.2018 Bulletin 2018/41**

(73) Proprietor: **Sekisui Plastics Co., Ltd.
Osaka-shi, Osaka 530-8565 (JP)**

(72) Inventors:
• **YAMADE, Takashi
Kobe-shi, Hyogo 650-8555 (JP)**
• **HARANO, Kenichi
Kobe-shi, Hyogo 650-8555 (JP)**
• **HOSHINO, Yuuki
Kobe-shi, Hyogo 650-8555 (JP)**
• **TAKANO, Masayuki
Tenri-shi, Nara 632-8505 (JP)**

(74) Representative: **Hoffmann Eitle
Patent- und Rechtsanwälte PartmbB
Arabellastraße 30
81925 München (DE)**

(56) References cited:
EP-A1- 2 143 353    JP-A- 2004 169 017
JP-B1- 5 690 983    JP-B2- 5 597 479
JP-B2- 5 597 479    JP-B2- 5 749 358
JP-B2- 5 756 893    US-A1- 2002 054 970
US-A1- 2011 265 351

EP 3 384 797 B1

**Description**

FIELD

The present invention relates to a shoe sole member and a shoe, more specifically, to a shoe sole member that is partially or entirely formed from a resin foam product constituted by integrating a plurality of resin foam particles, and a shoe including the shoe sole member.

BACKGROUND

Shoe sole members are required to have excellent cushioning performance and to be lightweight. Foam products are commonly used as materials for shoe sole members that satisfy such requirements.

Generally, in order to reduce the weight of foam products while maintaining rigidity suitable as foam products used for shoe sole members, resins having high rigidity need to be highly foamed. However, in conventional crosslinked foams, the more resins used for shoe sole members are highly foamed, the more the shoe sole members are easily fatigued. Therefore, the durability of the shoe sole members decreases, which is a problem.

Meanwhile, Patent Literatures 1 and 2 disclose shoe sole members composed of resin foam products formed by welding a plurality of thermoplastic polyurethane foam particles. Such shoe sole members are reinforced by welded portions between the polyurethane foam particles and thus have excellent durability Patent literature 3 discloses a shoe sole member according to the preamble of claim 1 and a shoe according to the preamble of claim 3.

However, shoe sole members composed of resin foam products using the foamed thermoplastic polyurethanes of Patent Literatures 1 and 2 do not have sufficient lightweight properties. Further, the shoe sole members of Patent Literatures 1 and 2 have a problem that their viscoelastic properties significantly vary depending on the use temperature.

CITATION LIST

Patent Literature

Patent Literature 1: JP 2013-220354 A
Patent Literature 2: Specification of US 2014/0017450 A1
Patent Literature 3: JP 5597479 B2

SUMMARY

Technical Problem

In view of the aforementioned problems, it is an object of the present invention to provide a shoe sole member which has not only both rigidity and lightweight properties that are suitable as a shoe sole member but also excellent durability and undergoes a small characteristic change within the shoe use temperature range, and a shoe including such a shoe sole member.

Solution to Problem

The inventors have found that the aforementioned problems can be solved by use of a resin foam product constituted by integrating resin foam particles containing a polyamide elastomer having specific viscoelastic properties.

That is, the shoe sole member according to the present invention is a shoe sole member that is partially or entirely formed from a resin foam product constituted by integrating a plurality of resin foam particles, wherein the plurality of resin foam particles are composed of a resin composition containing a polyamide elastomer, and the resin foam product satisfies all formulas (1) to (4) below, when a loss factor at -20°C is referred to as tan$\delta$ [-20°C], a loss factor at 25°C is referred to as tan$\delta$ [25°C], a storage elastic modulus at 25°C of the resin composition is referred to as E' [25°C], the minimum value of a complex viscosity at 100°C to 130°C of the resin composition is referred to as $\eta$min, and the maximum value thereof is referred to as $\eta$max, in a dynamic viscoelasticity measurement:

$$1 \leq \tan\delta\ [\text{-}20°\text{C}]/\tan\delta\ [25°\text{C}] \leq 5 \cdots (1);$$

$$50 \text{ MPa} \leq E' [25°C] \leq 400 \text{ MPa} \cdots (2);$$

$$0.05 \text{ MPa·s} \leq \eta min \cdots (3);$$

and

$$\eta max \leq 0.6 \text{ MPa·s} \cdots (4).$$

In the shoe sole member according to the present invention, an expansion ratio of the resin composition is preferably 3.0 or more.

The shoe according to the present invention is a shoe including a shoe sole member that is partially or entirely formed from a resin foam product constituted by integrating a plurality of resin foam particles, wherein the plurality of resin foam particles are composed of a resin composition containing a polyamide elastomer, and the resin foam product satisfies all formulas (1) to (4) below, when a loss factor at -20°C is referred to as tanδ [-20°C], a loss factor at 25°C is referred to as tanδ [25°C], a storage elastic modulus at 25°C of the resin composition is referred to as E' [25°C], the minimum value of a complex viscosity at 100°C to 130°C of the resin composition is referred to as $\eta$min, and the maximum value thereof is referred to as $\eta$max, in a dynamic viscoelasticity measurement:

$$1 \leq \tan\delta [-20°C]/\tan\delta [25°C] \leq 5 \cdots (1);$$

$$50 \text{ MPa} \leq E' [25°C] \leq 400 \text{ MPa} \cdots (2);$$

$$0.05 \text{ MPa·s} \leq \eta min \cdots (3);$$

and

$$\eta max \leq 0.6 \text{ MPa·s} \cdots (4).$$

In the shoe according to the present invention, an expansion ratio of the resin composition is preferably 3.0 or more.

BRIEF DESCRIPTION OF DRAWING

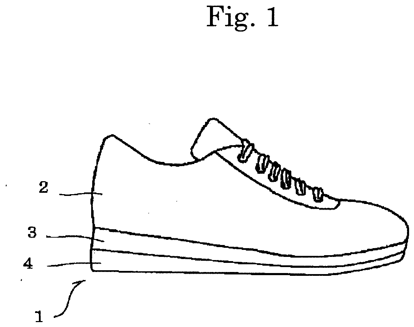

Fig. 1 is a schematic view showing a shoe using a shoe-forming member of an embodiment.

DESCRIPTION OF EMBODIMENTS

Hereinafter, embodiments of a shoe sole member and a shoe of the present invention will be described. However, the following embodiments are merely examples. The present invention is not limited to the following embodiments at all.

Fig. 1 shows a shoe including shoe sole members of this embodiment. The shoe 1 has an upper material 2 covering the upper surface of a foot and shoe sole members 3 and 4 disposed below the upper material 2 to constitute a shoe sole. The shoe 1 has an outer sole 4 arranged at a position that contacts the ground, and a midsole 3 arranged between the upper material 2 and the outer sole 4, which serve as the shoe sole members.

In the shoe sole members of this embodiment, the shoe sole members are partially or entirely formed from a resin foam product constituted by integrating a plurality of resin foam particles. For example, in the shoe 1 of this embodiment, both of the midsole 3 and the outer sole 4 may be formed from the resin foam product, or any one of the midsole 3 or the outer sole 4 may be formed from the resin foam product. Further, a part of the midsole 3 or a part of the outer sole 4 may be formed from the resin foam product. Preferably, in the shoe 1 of this embodiment, at least a part or the whole of the midsole 3 may be formed from the resin foam product.

The resin foam particles constituting the resin foam product are composed of a resin composition containing a polyamide elastomer. The shoe sole members of this embodiment can have suitable rigidity and suitable lightweight properties as shoe sole members by having such a configuration.

The polyamide elastomer contained in the resin composition is not specifically limited but is preferably polyether block amide (PEBA) having a hard segment composed of polyamide units and a soft segment composed of polyether units. The polyamide units constituting the hard segment, for example, may be polyamide 6, polyamide 66, polyamide 11, polyamide 12, polyamide 610, polyamide 612, or the like, and polyamide 11 or polyamide 12 is more preferable. These polyamide units may be individually used, or two or more of them may be used in combination. The polyether units constituting the soft segment, for example, may be polyethylene ether glycol, polypropylene ether glycol, polytetramethylene ether glycol, polyhexamethylene ether glycol, or the like, and polytetramethylene ether glycol is more preferable. These polyether units may be individually used, or two or more of them may be used in combination.

The resin composition may further contain other resin materials such as polyolefin resins, polystyrene resins, and polyurethanes, or chemicals such as pigments, antioxidants, and ultraviolet absorbers.

The resin foam particles can be fabricated from the resin composition using a conventionally known method for fabricating resin foam particles. Such a method, for example, may be an impregnation method in which resin particles free from foaming agents are fabricated, followed by impregnation of the resin particles with a foaming agent, or may be an extrusion method in which a resin composition containing a foaming agent is extruded into cooling water for granulation. In the impregnation method, the resin composition is first molded to fabricate resin particles. Next, the resin particles, a foaming agent, and an aqueous dispersant are introduced into an autoclave, followed by stirring under heat and pressure, to impregnate the resin particles with the foaming agent. The foaming agent after the impregnation is foamed, to obtain the resin foam particles. In the extrusion method, the resin composition and a foaming agent are, for example, added into an extruder equipped with a die having many small holes at its tip, followed by melt-kneading. The melt-kneaded product is extruded from the die into the form of strands and thereafter is immediately introduced into cooling water to be cured. The thus obtained cured material is cut into a specific length, to obtain the resin foam particles.

The foaming agent used in the aforementioned methods is not specifically limited and may be a chemical foaming agent or a physical foaming agent, for example. The chemical foaming agent is a foaming agent that generates a gas by chemical reaction or pyrolysis. Examples of the chemical foaming agent include inorganic chemical foaming agents such as sodium bicarbonate and ammonium carbonate, and organic chemical foaming agents such as azodicarbonamide. The physical foaming agent is, for example, a liquefied gas or a supercritical fluid, and is foamed by pressure reduction or heating. Examples of the physical foaming agent include aliphatic hydrocarbons such as butane, alicyclic hydrocarbons such as cyclobutane, and inorganic gases such as carbon dioxide gas, nitrogen, and air.

In this embodiment, an impregnation method using a supercritical fluid for foaming the resin composition is particularly preferably used. In such a case, the resin composition containing a polyamide elastomer can be dissolved in the supercritical fluid at a comparatively low temperature, and therefore the need for a high temperature for melting the polyamide elastomer is eliminated. Further, it is also advantageous in that generation of toxic gases due to foaming of a chemical foaming agent is suppressed since no chemical foaming agent is used.

The shape and size of the resin foam particles are not specifically limited. The shape of the resin foam particles is preferably spherical. In such a case, the volume-average particle size $D_{50}$ (median diameter) of the resin foam particles may be preferably in a diameter range of 1 to 20 mm, more preferably in a diameter range of 2 to 10 mm. In this description, the particle size of the resin foam particles is a value obtained by measuring the major diameter of the particles using a microscope.

The resin foam product is obtained by integrating the resin foam particles formed as above. The method for integrating the resin foam particles, for example, can be hot pressing the resin foam particles within a forming mold using a heat press machine or welding the resin foam particles to each other by a vapor method. The temperature for hot pressing the resin foam particles is appropriately adjusted depending on the type of the resin composition constituting the resin foam particles. For example, in the case where the resin composition contains PEBA, the resin foam particles can be hot-pressed appropriately under pressure within the range of 100 to 180°C.

In this embodiment, a binder may be appropriately used for integrating the resin foam particles. Examples of the binder include surface modifiers, and binders other than the foamed resin such as urethane. These binders may be individually used, or two or more of them may be used in combination. Preferably, the binders may be used in hot-pressing the resin foam particles.

Further, before the integration of the resin foam particles, a plurality of types of resin foam particles having different particle sizes or rigidities positioned in separate regions corresponding to their particle sizes or rigidities in advance may be integrated to serve as the resin foam product. For example, in the case where the resin foam particles are integrated by hot pressing, resin foam particles having a smaller particle size may be disposed at a position within the forming mold which corresponds to the inside of the foot after molding, or resin foam particles having a larger particle size may be disposed at a position within the forming mold which corresponds to the inside of the foot after molding. By adjusting the arrangement within the resin foam product corresponding to the particle sizes or the rigidities of the resin foam particles, a resin foam product having different rigidities depending on the regions can be formed.

The resin foam product of this embodiment has a smaller specific gravity than conventional foam products used for shoe sole members and has excellent lightweight properties as shoe sole members. The specific gravity of the resin foam product of this embodiment is preferably 0.3 or less, more preferably 0.15 or less.

The resin foam product of this embodiment has a lower compression set than conventional foam products used for shoe sole members. Therefore, the shoe sole members of this embodiment formed from the resin foam product have an advantage of having excellent elastic recoverability. Although the reason is not clear, it is inferred as follows. Since the resin foam product of this embodiment is formed by integrating the resin foam particles composed of the resin composition, skin layers are formed at the respective interfaces between the resin foam particles welded within the resin foam product. It is considered that the thus formed skin layers have a larger thickness than microcell parts within the resin foam product, and thus excellent elastic recoverability can be obtained. The compression set of the resin foam product may be preferably 20 % or less. The compression set of the resin foam product may be more preferably 15 % or less or 10 % or less. In this description, the compression set of the resin foam product is a value obtained by measurement by a constant load compression set test based on ASTM D395A. More specifically, it is a value obtained by measurement by a method described in Examples below.

The resin foam product of this embodiment undergoes a small change in dynamic viscoelasticity within the shoe use temperature range. Specifically, when the loss factor at -20°C is referred to as tanS [-20°C], and the loss factor at 25°C is referred to as tanδ [25°C], in dynamic viscoelasticity measurement, it satisfies formula (1) below.

$$1 \leq \tan\delta \, [\text{-}20°C]/\tan\delta \, [25°C] \leq 5 \cdots (1)$$

Since the resin foam product of this embodiment satisfies formula (1) above, the resin foam product undergoes a small change in dynamic viscoelasticity within such a temperature range. Therefore, the resin foam product has an advantage of undergoing a small change in cushioning performance within the shoe use temperature range. Preferably, the value of tanδ [-20°C]/tanδ [25°C] may be 1 or more and 3 or less. In this description, the loss factors of the resin foam product are values obtained by measurement at a frequency of 10 Hz in a measurement mode "tensile mode of sinusoidal distortion" according to JIS K 7244-4:1999. More specifically, they are values obtained by measurement in the conditions described in Examples below.

When the storage elastic modulus at 25°C of the resin composition is referred to as E' [25°C], the resin composition of this embodiment satisfies formula (2) below.

$$50 \, \text{MPa} \leq \text{E'} \, [25°C] \leq 400 \, \text{MPa} \cdots (2)$$

Since the resin composition of this embodiment satisfies formula (2) above, the resin foam particles of the resin composition contained in the resin foam product can have good expansion ratio. Therefore, the shoe sole members of this embodiment composed of the resin foam particles have excellent lightweight properties as shoe sole members. Preferably, the storage elastic modulus E' [25°C] at 25°C of the resin composition may be 150 MPa or more. In such a case, the weight of the shoe sole members can be more reduced. Preferably, the storage elastic modulus E' [25°C] at 25°C of the resin composition may be 300 MPa or less, more preferably 280 MPa or less. In this description, the storage elastic modulus of the resin composition is a value obtained by measurement at a frequency of 10 Hz in a measurement mode "tensile mode of sinusoidal distortion" according to JIS K 7244-4:1999. More specifically, it is a value obtained by measurement in the conditions described in Examples below.

When the minimum value of the complex viscosity at 100°C to 130°C of the resin composition is referred to as $\eta$min, the resin composition of this embodiment satisfies formula (3) below.

$$0.05 \, \text{MPa·s} \leq \eta\text{min} \cdots (3)$$

Further, when the maximum value of the complex viscosity at 100°C to 130°C of the resin composition is referred to as $\eta$max, the resin composition of this embodiment satisfies formula (4) below.

$$\eta\text{max} \leq 0.6 \, \text{MPa·s} \cdots (4)$$

Since the resin composition of this embodiment satisfies formulas (3) and (4) above, the resin composition of the resin foam particles contained in the resin foam product can have good expansion ratio. Therefore, the shoe sole members of this embodiment composed of the resin foam particles have excellent lightweight properties as shoe sole members. The expansion ratio of the resin composition may be preferably 3.0 or more, more preferably 5.0 or more. When the expansion ratio of the resin composition is less than 3.0, the specific gravity of the resin foam product is high, which may result in a lack of lightweight or cushioning properties required for shoe sole members. When the $\eta$min falls below 0.05 MPa·s, over-contraction occurs after foaming, resulting in insufficient expansion ratio for use as shoe sole members. The $\eta$max exceeding 0.6 MPa·s results in insufficient foaming and insufficient expansion ratio for use as shoe sole members. Preferably, the minimum value $\eta$min of the complex viscosity of the resin composition may be 0.15 MPa·s or more. Preferably, the maximum value $\eta$max of the complex viscosity of the resin composition may be 0.55 MPa·s or less. In this description, the complex viscosity of the resin composition is a value obtained by measurement at a frequency of 10 Hz in a measurement mode "tensile mode of sinusoidal distortion" according to JIS K 7244-4:1999. More specifically, it is a value obtained by measurement in the conditions described in Examples below.

The shoe sole members of this embodiment, and the shoe including the shoe sole members can be produced in the same manner as conventionally known methods for producing shoes. For example, a method for producing shoe sole members including the shoe sole members of this embodiment includes the following steps:

(a) a first step of producing resin foam particles from a resin composition containing a polyamide elastomer by the impregnation method, the extrusion method, or the like;
(b) a second step of introducing the resin foam particles obtained in the first step into a forming mold, followed by hot-pressing the forming mold using a heat press machine, to obtain a resin foam product in which the resin foam particles are integrated; and
(c) a third step of fabricating shoe sole members that are partially or entirely formed from the resin foam product obtained in the second step.

In the second step, the shape of the shoe sole members may be directly formed by hot-pressing using a forming mold. In such a case, shoe sole members that are entirely formed from the resin foam product can be directly produced, and therefore the third step can be omitted.

Since the shoe sole members of this embodiment are shoe sole members that are partially or entirely formed from the resin foam product constituted by integrating a plurality of resin foam particles, with the plurality of resin foam particles consisting of a resin composition containing a polyamide elastomer and all formulas (1) to (4) below being satisfied, the shoe sole members have advantages of having both rigidity and lightweight properties that are suitable as shoe sole members, having excellent durability, and undergoing a small characteristic change within the shoe use temperature range. Further, since the shoe of this embodiment includes the shoe sole members, the shoe sole has advantages of having both suitable rigidity and suitable lightweight properties, having excellent durability, and undergoing a small characteristic change within the shoe use temperature range.

$$1 \leq \tan\delta\ [\text{-}20°C]/\tan\delta\ [25°C] \leq 5 \cdots (1)$$

$$50\ \text{MPa} \leq E'\ [25°C] \leq 400\ \text{MPa} \cdots (2)$$

$$0.05\ \text{MPa·s} \leq \eta\text{min} \cdots (3)$$

$$\eta\text{max} \leq 0.6\ \text{MPa·s} \cdots (4)$$

Here, a further detailed description will not be repeated, but even matter that is not directly described above can be appropriately employed in the present invention if it is conventionally known technical matter for shoe sole members.

EXAMPLES

Hereinafter, the present invention will be clarified by way of specific examples and comparative examples of the present invention. However, the present invention is not limited to the following examples.

(Physical property test of resin composition)

As the resin compositions of Examples 1 to 5 and Comparative Examples 1 to 4, the following particulate raw materials composed of polyamide polyether block amide were used. "PEBAX" 2533, 4033, 5533, and 7033, manufactured by Arkema S.A. "UBESTA" 9048X and 9055X, manufactured by Ube Industries, Ltd. "VESTAMID" E58-S4, manufactured by Daicel Corporation "DAIAMID" E55K1W2 and E73K2, manufactured by Daicel Corporation

Raw materials composed of these resin compositions were melt-solidified and formed into flat plates and thereafter were cut into strips with a length of $33 \pm 3$ mm, a width of $5 \pm 1$ mm, and a thickness of $2 \pm 1$ mm, to obtain test pieces. The storage elastic modulus E' [25°C] at 25°C of each test piece was measured according to JIS K 7244-4:1999, using a dynamic viscoelasticity measuring instrument "Rheogel-E4000" manufactured by UBM as a measuring device in the following conditions. Table 1 shows the results.

Measurement mode: Tensile mode of sinusoidal distortion
Frequency: 10 Hz
Distance between chucks: 20 mm
Load: Automatic static load
Dynamic strain: 5 pm
Heating rate: 2°C/min

Further, the complex viscosity $\eta$ at 100 to 130°C of each test piece was measured according to JIS K 7244-4:1999, using the aforementioned device in the same conditions as above. Table 1 shows the minimum value and the maximum value. At this time, the complex viscosity $\eta$ had the minimum value $\eta$min at 130°C and the maximum value $\eta$max at 100°C in all the test pieces of Examples and Comparative Examples.

(Fabrication of resin foam particles)

Resin foam particles were produced from each of the resin compositions of Examples 1 to 5 and Comparative Examples 1 to 4, as follows.

Fabrication of resin particles

Resin particles with a particle size of 1.3 mm were first produced by particulating the resin composition using the following devices. The thus obtained resin particles were used for subsequent foaming.

Extruder: Tandem type with a bore of 65 mm-50 mm
Granulating die: Provided with 40 nozzles with a diameter of 0.8 mm and a land length of 3.0 mm, and joined to the extrusion outlet of the extruder Underwater hot cutter: Provided with a high-speed rotary cutter with 3000 rotations per minute having 8 blades in the circumferential direction, with the high-speed rotary cutter being in close contact with the nozzle outlet of the granulating die, and the diverter resin outlet of the underwater hot cutter being equipped with a diameter changing jig for diverter resin outlet (bore: 3 mm and land length: 15 mm)

Specifically, the resin composition was particulated, as follows. First, the resin composition was fed into the extruder at a rate of 50 kg/hour, and the resin composition was heated and melt-kneaded. The resin composition was cooled on the extrusion outlet side of the extruder so that the temperature of the resin composition was 175°C. Subsequently, the resin composition within the extruder was extruded into a chamber in which cooling water at 40° C and a water pressure of 0.4 MPa was circulated through a granulating die maintained at 300°C by a heater. Simultaneously with the extrusion, the resin composition extruded through the die was cut by the high-speed rotary cutter of the underwater hot cutter. The thus cut resin particles were taken out of the chamber, followed by dehydration and drying, to obtain spherical resin particles with a particle size of 1.3 mm.

Foaming of resin particles

In order to calculate the expansion ratio later, the specific gravity of the resin particles used for producing the resin foam particles was measured according to JIS K 7311:1995 (underwater displacement). Subsequently, 2.3 kg of the aforementioned resin particles, 2.3 kg of distilled water, 6.0 g of magnesium pyrophosphate and 0.3 g of sodium dodecylbenzenesulfonate as dispersion stabilizers, and 2.3 g of ethylene bis-stearic acid amide as a foam stabilizer were introduced into an autoclave having an internal capacity of 5 L and equipped with a stirrer, followed by stirring inside the autoclave at 320 rpm for suspension. Subsequently, the temperature inside the autoclave was raised to 110°C, thereafter 460 g of butane (isobutane: normal butane = 35:65 (mass ratio)) as a foaming agent was injected into the autoclave, and the inside of the autoclave was maintained at 110°C for 6 hours. Thereafter, the inside of the autoclave was cooled to 20°C, and then the resin particles within the autoclave were taken out. The taken-out resin particles were placed in the presence of steam at 130°C, thereby foaming the butane foaming agent with which the aforementioned resin particles were impregnated, to obtain resin foam particles.

Thereafter, the bulk density of the thus obtained resin foam particles was measured. The bulk density of the resin foam particles was compared with the specific gravity of the resin composition before foaming, to calculate the expansion ratio of the resin composition. Table 1 shows the results. In Table 1, the cases where the expansion ratio of the resin composition was 3 times or more are expressed as o, and the cases where the expansion ratio of the resin composition was less than 3 times are expressed as x.

Table 1

| | Resin composition | E' (MPa) 25°C | $\eta$* (MPa·s) | | Expansion ratio 3 times or more |
|---|---|---|---|---|---|
| | | | $\eta$ min | $\eta$ max | |
| Ex. 1 | PEBAX 4033 | 94.3 | 0.18 | 0.25 | ○ |
| Ex. 2 | PEBAX 5533 | 200 | 0.37 | 0.51 | ○ |
| Ex. 3 | UBESTA 9048X | 161 | 0.21 | 0.40 | ○ |
| Ex. 4 | VESTAMID E58-S4 | 253 | 0.16 | 0.48 | ○ |
| Ex. 5 | DAIAMID E55K1W2 | 161 | 0.30 | 0.41 | ○ |
| C. Ex. 1 | PEBAX 2533 | 13.6 | 0.01 | 0.02 | ✕ |
| C. Ex. 2 | PEBAX 7033 | 556 | 0.79 | 0.96 | ✕ |
| C. Ex. 3 | UBESTA 9055X | 287 | 0.48 | 0.63 | ✕ |
| C. Ex. 4 | DAIAMID E73K2 | 775 | 0.84 | 1.06 | ✕ |

As is obvious from Examples 1 to 5 and Comparative Examples 1 to 4, the resin compositions of Examples 1 to 5 in which the storage elastic modulus E' [25°C] at 25°C was in the range of 50 to 400 MPa, the minimum value $\eta$min of the complex viscosity $\eta$ at 100 to 130°C was 0.05 MPa·s or more, and the maximum value $\eta$max thereof was 0.6 MPa·s or less had an expansion ratio of 3 times or more. In contrast, the resin compositions of Comparative Examples 1 to 4 in which the storage elastic modulus and the complex viscosity failed to satisfy the aforementioned ranges had an expansion ratio of less than 3 times.

(Production of shoe sole members)

Example 6

The resin foam particles fabricated from the resin composition of Example 2 as above were introduced into a closed container. After nitrogen was injected into the closed container at a pressure of 0.5 MPaG, the inside of the closed container was allowed to stand at normal temperature over 6 hours. Thus, the resin foam particles were impregnated with nitrogen. After the resin foam particles were taken out of the closed container, cavities of a forming mold having the same shapes as the shoe sole members were filled with the resin foam particles. The forming mold was heated by steam at 0.24 MPa for 35 seconds, thereby integrally molding the shoe sole members.

Example 7

Shoe sole members were produced in the same manner as in Example 6 except that the resin foam particles fabricated from the resin composition of Example 5 as above were used instead of the resin foam particles used in Example 6.

Comparative Example 5

ZOTEK(R)PEBA foam, manufactured by Zotefoams pic., was used as shoe sole members composed of a plate-shaped resin foam product of Comparative Example 5, as it was.

Comparative Example 6

From a shoe sole used in a shoe "energy boost" (2013 model) manufactured by adidas AG, foam parts composed of a thermoplastic polyurethane elastomer were directly cut, which were served as shoe sole members of Comparative Example 6.

Comparative Example 7

Using a compound material of a linear low density polyethylene as a resin composition, shoe sole members composed of a plate-shaped resin foam product were produced.

(Physical property test for shoe sole members)

Specific gravity

The specific gravity of the shoe sole members obtained by Examples 6 and 7 and Comparative Examples 5 to 7 was measured according to JIS K 7311:1995 (underwater displacement). Table 2 shows the results.

Hardness

The hardness of the shoe sole members obtained by Examples 6 and 7 and Comparative Examples 5 to 7 was measured using "Durometer Type C", manufactured by KOBUNSHI KEIKI CO., LTD. as an Asker C hardness meter. Table 2 shows the results.

Compression set

The shoe sole members obtained in Examples 6 and 7 and Comparative Examples 5 to 7 were cut into disks with a diameter of $29 \pm 1$ mm and a thickness of $4 \pm 1$ mm, to obtain test pieces. The compression set of each test piece was measured according to the constant load compression set test based on ASTM D 395A, using a "constant load compression tester" manufactured by Toyo Seiki Seisaku-sho, Ltd., as a measuring device. Specifically, in an environmental temperature of $20 \pm 3°C$, a stress of 0.59 MPa was applied to each test piece for 22 hours, to measure the set after 24 hours from unloading.

Temperature dependence of dynamic viscoelasticity

The shoe sole members obtained in Examples 6 and 7 and Comparative Examples 5 to 7 were cut into strips with a length of $33 \pm 3$ mm, a width of $5 \pm 1$ mm, and a thickness of $3 \pm 1$ mm, to obtain test pieces. The loss factors $\tan\delta$ [-20°C] and $\tan\delta$ [25°C] at -20°C and 25°C of each test piece were measured according to JIS K 7244-4:1999, using a dynamic viscoelasticity measuring instrument "Rheogel-E4000" manufactured by UBM as a measuring device in the following conditions. Table 2 shows the results.

Measurement mode: Tensile mode of sinusoidal distortion

Frequency: 10 Hz

Distance between chucks: 20 mm

Load: Automatic static load

Dynamic strain: 5 $\mu$m

Heating rate: 2°C/min

Table 2

|  | Ex. 6 | Ex. 7 | C. Ex. 5 | C. Ex. 6 | C. Ex. 7 |
|---|---|---|---|---|---|
| Foaming agent | Physical | Physical | Physical | Physical | Chemical |

(continued)

| | Ex. 6 | Ex. 7 | C. Ex. 5 | C. Ex. 6 | C. Ex. 7 |
|---|---|---|---|---|---|
| Resin composition | PEBAX 5533 | DAIAMID E55K1W2 | PEBA | TPU | LLPDE |
| Foam shape | Particles | Particles | Plate | Particles | Plate |
| Hardness (ASKER-C) | 48 | 42 | 48 | 37 | 53 |
| Specific gravity | 0.074 | 0.089 | 0.061 | 0.22 | 0.12 |
| Compression set (%) | 8 | 8 | 25 | 5 | 25 |
| tanδ [-20°C] | 0.11 | 0.10 | 0.08 | 0.58 | 0.15 |
| tanδ [25°C] | 0.07 | 0.06 | 0.06 | 0.09 | 0.08 |
| tanδ [-20°C]/tanδ [25°C] | 1.64 | 1.76 | 1.35 | 6.84 | 1.84 |

As is obvious from Examples 6 and 7 and Comparative Examples 5 to 7, it is understood that the shoe sole members of Examples 6 and 7 formed by integrating the resin foam particles fabricated from the polyamide elastomer resin compositions of Examples 2 and 5 having good foamability were excellent in all of the hardness, the specific gravity, and the compression set, and the temperature dependence of the dynamic viscoelasticity was also small. In contrast, the compression set of the shoe sole members of Comparative Examples 5 and 7 that were not formed by integrating the resin foam particles was large. Therefore, it is understood that the recovery properties were poor, and fatigue occurred easily. Further, it is understood that the specific gravity of the shoe sole members of Comparative Examples 6 and 7 that did not use polyamide elastomers as the resin compositions was large, and the lightweight properties required for shoe soles were not enough. Further, it is understood that the temperature dependence of the dynamic viscoelasticity at -20°C and 25°C of the shoe sole members of Comparative Example 6 formed by integrating the resin foam particles fabricated from the thermoplastic polyurethane elastomer resin composition was large. That is, it is understood that the characteristic change within the shoe use temperature range was large.

REFERENCE SIGNS LIST

1:   Shoe
3:   Midsole
4:   Outer sole

**Claims**

1. A shoe sole member that is partially or entirely formed from a resin foam product constituted by integrating a plurality of resin foam particles, wherein
   the plurality of resin foam particles consist of a resin composition containing a polyamide elastomer, **characterized in that**,
   the resin foam product satisfies all formulas (1) to (4) below, when a loss factor at -20°C is referred to as tanδ [-20°C], a loss factor at 25°C is referred to as tanδ [25°C], a storage elastic modulus at 25°C of the resin composition is referred to as E' [25°C], the minimum value of a complex viscosity at 100°C to 130°C of the resin composition is referred to as ηmin, and the maximum value thereof is referred to as ηmax, in a dynamic viscoelasticity measurement:

$$1 \leq \tan\delta \ [\text{-}20°C]/\tan\delta \ [25°C] \leq 5 \cdots (1);$$

$$50 \ \text{MPa} \leq E' \ [25°C] \leq 400 \ \text{MPa} \cdots (2);$$

$$0.05 \ \text{MPa·s} \leq \eta\text{min} \cdots (3);$$

and

$$\eta max \leq 0.6 \text{ MPa·s} \cdots (4).$$

**2.** The shoe sole member according to claim 1, wherein
an expansion ratio of the resin composition is 3.0 or more.

**3.** A shoe comprising:

a shoe sole member that is partially or entirely formed from a resin foam product constituted by integrating a plurality of resin foam particles, wherein
the plurality of resin foam particles consist of a resin composition containing a polyamide elastomer, **characterized in that**,
the resin foam product satisfies all formulas (1) to (4) below, when a loss factor at -20°C is referred to as $\tan\delta$ [-20°C], a loss factor at 25°C is referred to as $\tan\delta$ [25°C], a storage elastic modulus at 25°C of the resin composition is referred to as E' [25°C], the minimum value of a complex viscosity at 100°C to 130°C of the resin composition is referred to as $\eta min$, and the maximum value thereof is referred to as $\eta max$, in a dynamic viscoelasticity measurement:

$$1 \leq \tan\delta \text{ [-20°C]}/\tan\delta \text{ [25°C]} \leq 5 \cdots (1);$$

$$50 \text{ MPa} \leq E' \text{ [25°C]} \leq 400 \text{ MPa} \cdots (2);$$

$$0.05 \text{ MPa·s} \leq \eta min \cdots (3);$$

and

$$\eta max \leq 0.6 \text{ MPa·s} \cdots (4).$$

**4.** The shoe according to claim 3, wherein
an expansion ratio of the resin composition is 3.0 or more.

**Patentansprüche**

**1.** Schuhsohlenelement, das teilweise oder vollständig aus einem Harzschaumprodukt gebildet ist, das durch Integrieren einer Mehrzahl von Harzschaumpartikeln gebildet wird, wobei
die Mehrzahl von Harzschaumpartikeln aus einer Harzzusammensetzung besteht, die ein Polyamidelastomer enthält,
**dadurch gekennzeichnet, dass**
das Harzschaumprodukt alle nachstehenden Formeln (1) bis (4) erfüllt, wenn ein Verlustfaktor bei -20°C als $\tan\delta$ [-20°C] bezeichnet wird, ein Verlustfaktor bei 25°C als $\tan\delta$ [25°C] bezeichnet wird, ein Speicher-Elastizitätsmodul bei 25°C der Harzzusammensetzung als E' [25°C] bezeichnet wird, der Minimalwert einer komplexen Viskosität bei 100°C bis 130°C in einer dynamischen Viskoelastizitätsmessung der Harzzusammensetzung als $\eta min$ bezeichnet wird, und der Maximalwert davon als $\eta max$ bezeichnet wird:

$$1 \leq \tan\delta \text{ [-20°C]}/\tan\delta \text{ [25°C]} \leq 5 \cdots (1);$$

$$50 \text{ MPa} \leq E' \text{ [25°C]} \leq 400 \text{ MPa} \cdots (2);$$

$$0,05 \text{ MPa·s} \leq \eta min \cdots (3);$$

und

$$\eta max \leq 0,6 \text{ MPa·s} \cdots (4).$$

**2.** Schuhsohlenelement gemäß Anspruch 1, wobei
ein Expansionsverhältnis der Harzzusammensetzung 3,0 oder mehr beträgt.

**3.** Schuh, umfassend:

ein Schuhsohlenelement, das teilweise oder vollständig aus einem Harzschaumprodukt gebildet ist, das durch Integrieren einer Mehrzahl von Harzschaumpartikeln gebildet wird, wobei
die Mehrzahl von Harzschaumpartikeln aus einer Harzzusammensetzung besteht, die ein Polyamidelastomer enthält,
**dadurch gekennzeichnet, dass**
das Harzschaumprodukt alle nachstehenden Formeln (1) bis (4) erfüllt, wenn ein Verlustfaktor bei -20°C als $\tan\delta$ [-20°C] bezeichnet wird, ein Verlustfaktor bei 25°C als $\tan\delta$ [25°C] bezeichnet wird, ein Speicher-Elastizitätsmodul bei 25°C der Harzzusammensetzung als E' [25°C] bezeichnet wird, der Minimalwert einer komplexen Viskosität bei 100°C bis 130°C in einer dynamischen Viskoelastizitätsmessung der Harzzusammensetzung als $\eta min$ bezeichnet wird, und der Maximalwert davon als $\eta max$ bezeichnet wird:

$$1 \leq \tan\delta \ [-20°C]/\tan\delta \ [25°C] \leq 5 \cdots (1);$$

$$50 \text{ MPa} \leq E' \ [25°C] \leq 400 \text{ MPa} \cdots (2);$$

$$0,05 \text{ MPa·s} \leq \eta min \cdots (3);$$

und

$$\eta max \leq 0,6 \text{ MPa·s} \cdots (4).$$

**4.** Schuh gemäß Anspruch 3, wobei
ein Expansionsverhältnis der Harzzusammensetzung 3,0 oder mehr beträgt.

**Revendications**

**1.** Élément de semelle de chaussure qui est partiellement ou entièrement formé à partir d'un produit en mousse de résine constitué par l'intégration d'une pluralité de particules de mousse de résine,
dans lequel la pluralité de particules de mousse de résine se compose d'une composition de résine contenant un élastomère polyamide, **caractérisé en ce que**,
le produit en mousse de résine satisfait à toutes les formules (1) à (4) ci-dessous, lorsqu'un facteur de perte à -20 C est appelé $\tan\delta$ [-20 °C], un facteur de perte à 25 °C est appelé $\tan\delta$ [25 °C], un module d'élasticité au stockage à 25 °C de la composition de résine est appelé E' [25 °C], la valeur minimale d'une viscosité complexe allant de 100 °C à 130 °C de la composition de résine est appelée $\eta min$, et sa valeur maximale est appelée $\eta max$, dans une mesure de viscoélasticité dynamique :

$$1 \leq \tan\delta \ [-20 °C]/\tan\delta \ [25 °C] \leq 5 \qquad (1);$$

$$50 \text{ MPa} \leq E' \text{ [25 °C]} \leq 400 \text{ MPa} \qquad (2) \text{ ;}$$

$$0,05 \text{ MPa} \bullet s \leq \eta\text{min} \qquad (3) \text{ ;}$$

et

$$\eta\text{max} \leq 0,6 \text{ MPa} \bullet s \qquad (4).$$

2. Élément de semelle de chaussure selon la revendication 1, dans lequel un taux d'expansion de la composition de résine est supérieur ou égal à 3,0.

3. Chaussure comprenant :

un élément de semelle de chaussure qui est partiellement ou entièrement formé à partir d'un produit en mousse de résine constitué par l'intégration d'une pluralité de particules de mousse de résine, dans laquelle la pluralité de particules de mousse de résine se compose d'une composition de résine contenant un élastomère polyamide, **caractérisée en ce que**, le produit en mousse de résine satisfait à toutes les formules (1) à (4) ci-dessous, lorsqu'un facteur de perte à -20 °C est appelé tan$\delta$ [-20 °C], un facteur de perte à 25 °C est appelé tan$\delta$ [25 °C], un module d'élasticité au stockage à 25 °C de la composition de résine est appelé E' [25 °C], la valeur minimale d'une viscosité complexe allant de 100 °C à 130 °C de la composition de résine est appelée $\eta$min, et sa valeur maximale est appelée $\eta$max, dans une mesure de viscoélasticité dynamique :

$$1 \leq \tan\delta \text{ [-20 °C]}/\tan\delta \text{ [25 °C]} \leq 5 \qquad (1) \text{ ;}$$

$$50 \text{ MPa} \leq E' \text{ [25 °C]} \leq 400 \text{ MPa} \qquad (2) \text{ ;}$$

$$0,05 \text{ MPa} \bullet s \leq \eta\text{min} \qquad (3) \text{ ;}$$

et

$$\eta\text{max} \leq 0,6 \text{ MPa} \bullet s \qquad (4).$$

4. Chaussure selon la revendication 3, dans laquelle un taux d'expansion de la composition de résine est supérieur ou égal à 3,0.

# Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013220354 A
- US 20140017450 A1

- JP 5597479 B